# EUROPEAN PATENT APPLICATION

(11) **EP 4 749 995 A1**
(43) Date of publication of application: **27.05.2026**
(21) Application number: 24845942.2
(22) Date of filing: 19.07.2024
(51) Int. Cl.: H04L 9/32, B64F 1/22, E04H 6/44

(54) **AIRCRAFT MOBILITY TAKEOFF AND LANDING AIRFIELD SECURITY SYSTEM AND CONTROL METHOD THEREFOR**

(30) Priority: 21.07.2023 KR 20230095391; 29.12.2023 KR 20230196582
(71) Applicant: Hyundai Elevator Co., Ltd., Chungju-si, Chungcheongbuk-do 27329 (KR)
(72) Inventor: KIM, Hyun Goo, Chungju-si Chungcheongbuk-do 27329 (KR); KIM, Du Hyun, Chungju-si Chungcheongbuk-do 27329 (KR); KIM, Sung Gyun, Chungju-si Chungcheongbuk-do 27329 (KR)
(74) Representative: Baldus, Oliver
(86) International application number: PCT/KR2024/010430
(87) International publication number: WO 2025/023640

(57) **Abstract**

An air mobility take-off and landing airfield security system. The air mobility take-off and landing airfield security system includes: a user terminal including a boarding information storage unit configured to store a user's boarding information; a vertiport security system including a security token generation unit configured to generate a security token based on the user's boarding information provided through the user terminal; and a boarding gate elevator (EL) system including an elevator car assignment unit configured to assign an elevator car upon authentication of the security token and a security information recognition unit including an image capture unit configured to recognize the user's boarding information.

## Description

### [Technical Field]

The present invention relates to an air mobility take-off and landing airfield security system and a method of controlling the same.

### [Background Art]

In response to demand for reduction of exhaust gas emissions to prevent global warming, the global urban air mobility (UAM) market is rapidly expanding.

That is, a revolution in the transportation sector and development of new technologies are required to reduce emissions from ground transportation, which account for about 16% of global carbon dioxide emissions. Furthermore, to address severe ground traffic congestion exacerbated by urban growth and the resulting degradation of the urban environment, it is necessary to build an urban air traffic system and integrate the same with the existing ground transportation system.

A vertiport, which is a specialized airport for take-off and landing of UAM aircraft, may include a take-off and landing area, a hangar, and a boarding area.

Meanwhile, if airport-level passenger security screening procedures and standards are imposed on air taxi users at the urban air mobility vertiport, this can undermine user convenience, which is the primary advantage of air taxis over existing ground transportation networks.

However, given that air taxis operate at low altitudes over densely populated urban centers, lowering the level of security screening can create problems in preventing and deterring anti-social criminal acts, not only against passengers on board air taxis but also against unspecified facilities and citizens on the ground.

Therefore, there is currently a necessity to devise measures, such as efficient security screening procedures, equipment, software, and inter-agency coordination with relevant authorities, that are simpler and more efficient than current airport-level passenger security screening procedures and standards, but which can ultimately achieve the goal of security screening, including search for criminals and wanted persons.

### [Disclosure]

### [Technical Problem]

It is one aspect of the present invention to provide an air mobility take-off and landing airfield security system capable of utilizing an elevator as a security checkpoint, and a method of controlling the same.

It is another aspect of the present invention to provide an air mobility take-off and landing airfield security system featuring a security framework based on issuance and authentication of a plurality of security tokens, and a method of controlling the same.

### [Technical Solution]

In accordance with one aspect of the present invention, an air mobility take-off and landing airfield security system includes: a user terminal including a boarding information storage unit configured to store a user's boarding information; a vertiport security system including a security token generation unit configured to generate a security token based on the user's boarding information provided through the user terminal; and a boarding gate elevator (EL) system including an elevator car assignment unit configured to assign an elevator car upon authentication of the security token and a security information recognition unit including an image capture unit configured to recognize the user's boarding information.

The user terminal may further include: a security token request unit configured to provide the user's boarding information to the vertiport security system and to request a security token; and an authentication information storage unit configured to store the security token provided by the vertiport security system.

The vertiport security system may further include: a security information recognition unit configured to confirm security token information presented by the user; and a security screening unit configured to confirm the user's security information and the boarding information and to carry out an authentication process.

The user's security token and boarding information may be confirmed at a security checkpoint, and the security token generation unit may generate a secondary security token and send the secondary security token to the user terminal.

The secondary security token may be authenticated at an elevator gate in a boarding area, and, upon completion of authentication of the secondary security token, the elevator car assignment unit may call a dedicated elevator car corresponding to the secondary security token.

When the user's boarding information is confirmed by the security information recognition unit, the boarding gate EL system may issue a tertiary security token.

The tertiary security token may be authenticated at a take-off area and, upon authentication of the tertiary security token, permission to board a UAM aircraft may be granted.

In accordance with another aspect of the present invention, a method of controlling an air mobility take-off and landing airfield security system includes: a boarding information transmission and primary security token request step in which a user provides boarding information, such as reservation information, to a vertiport security system and requests a primary security token; a primary security token generation and sending step in which the vertiport security system confirms the user's reservation information, generates a primary security token, and sends the primary security token to a user terminal; a primary security token authorization step in which the user presents the primary security token stored in the user terminal and requests authorization of the primary security token; a secondary security token generation and sending step in which, upon authorization of the primary security token, a security token generation unit generates a secondary security token and sends the secondary security token to the user terminal; a secondary security token authorization step in which the user requests authorization of the secondary security token and the secondary security token is authorized; an elevator car assignment step in which, upon completion of authorization of the secondary security token, a dedicated elevator car is assigned; and an additional security screening step in which security screening for the user's boarding information is carried out at an elevator hall or inside the elevator car.

The method may further include: a tertiary security token generation and sending step in which, upon completion of a security authorization process in the additional security screening step, a tertiary security token is generated and provided to the user terminal; and a tertiary security token authorization and boarding permission step in which an authentication process for the tertiary security token is carried out at a take-off area and, upon completion of the authentication process, boarding permission is granted.

In the primary security token authorization step, the user may present the primary security token stored in the user terminal at a security checkpoint to request authorization of the primary security token, and, in the secondary security token authorization step, the user may request authorization of the secondary security token after moving to an elevator gate in a boarding area, and, in response to the user's request, the secondary security token may be authorized.

### [Advantageous Effects]

Embodiments of the present invention provide an air mobility take-off and landing airfield security system that enables security screening merely by boarding an elevator and provides more secure security screening through the multiple issuance and authentication of security tokens, and a method of controlling the same.

In addition, embodiments of the present invention provide an air mobility take-off and landing airfield security system that can ensure easy recognition of risk factors, such as suspicious persons or dangerous cargo, and a method of controlling the same.

### [Description of Drawings]

FIG. 1 is a schematic block diagram of an air mobility take-off and landing airfield security system according to one embodiment of the present invention.
FIG. 2 is a schematic block diagram illustrating a technical implementation of the air mobility take-off and landing airfield security system of FIG. 1.
FIG. 3 is a schematic diagram illustrating usage of the air mobility take-off and landing airfield security system according to one embodiment of the present invention.
FIG. 4 is a flow diagram of a method of controlling the air mobility take-off and landing airfield security system according to one embodiment of the present invention.
FIG. 5 is a schematic block diagram illustrating an embodiment of a detailed technical configuration of the method for controlling the air mobility take-off and landing airfield security system shown in FIG. 4.

### [Best Mode]

Hereinafter, exemplary embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of' depending on the context. The expression "configured (or set up) to" may not necessarily mean "specifically designed (hardware wise) to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

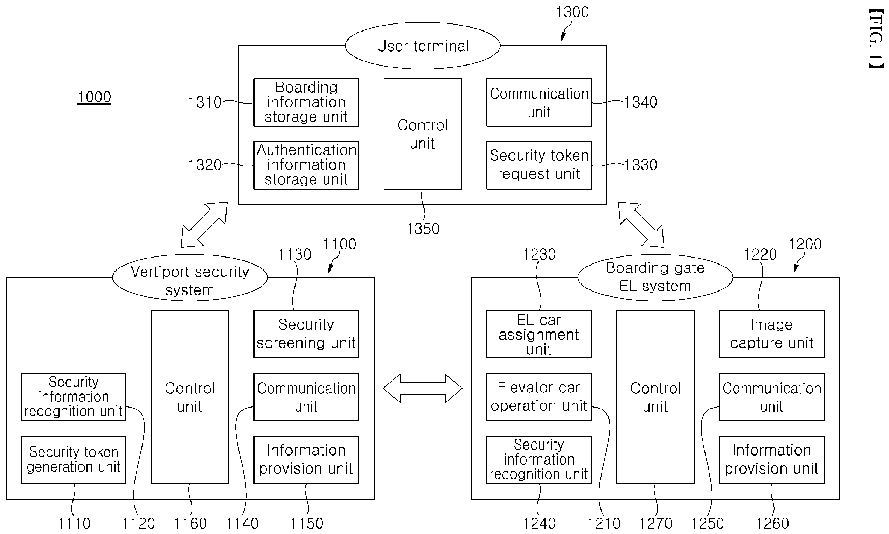

FIG. 1 is a schematic block diagram of an air mobility take-off and landing airfield security system according to one embodiment of the present invention.

Referring to FIG. 1, the air mobility take-off and landing airfield security system 1000 includes a vertiport security system 1100, a boarding gate elevator (EL) system 1200, and a user terminal 1300.

More specifically, the vertiport security system 1100 includes a security token generation unit 1110, a security information recognition unit 1120, a security screening unit 1130, a communication unit 1140, an information provision unit 1150, and a control unit 1160.

The security token generation unit 1110 generates a security token in response to a user request for a security token.

In addition, the security token generation unit 1110 may generate a corresponding security token based on recognition of security information in a stage-by-stage manner.

That is, when a user requests a security token while providing boarding information, the security token generation unit 1110 generates a primary security token. When authentication of the primary security token and security screening at a security checkpoint are completed, the security token generation unit 1110 may generate a secondary security token. Subsequently, when security screening at an elevator hall or inside an elevator car is completed, the security token generation unit 1110 may generate a tertiary security token.

The primary security token may store the boarding information.

The secondary security token may store at least one of the primary security token and the boarding information.

The tertiary security token may contain at least one of the primary security token, the secondary security token, and the boarding information.

The security token may be implemented as a connected token (for example, smart card, ID card, and the like), a disconnected token (for example, authentication number, barcode, biometric data, and the like), or a contactless token (for example, NFC-enabled token, Bluetooth-enabled token, and the like).

The security information recognition unit 1120 confirms security information provided by a user.

The security information recognition unit 1120 may confirm security token information provided by a user in a stage-by-stage manner (for example, at a security checkpoint, at an elevator gate in a boarding area, and at an elevator hall or inside an elevator car).

The security information recognition unit 1120 may recognize various security-related details concerning the boarding information (for example, user identity, the number of people, the type and weight of baggage, and the like).

The security screening unit 1130 confirms a user's security information and boarding information in a stage-by-stage manner and to carry out an authentication process. In addition, the security screening unit 1130 may authorize already-issued tokens and approve issuance of an additional security token based on confirmation of the security information provided through the security information recognition unit 1120.

The communication unit 1140 may provide the security token generated by the security token generation unit 1110 to the user terminal 1300.

In addition, the communication unit 1140 may transmit and receive the security-related details to and from the boarding gate elevator (EL) system 1200.

The information provision unit 1150 may provide security-related information, authorization information, boarding information, passenger information, and the like.

The control unit 1160 may control operation of the security token generation unit 1110, the security information recognition unit 1120, the security screening unit 1130, the communication unit 1140, and the information provision unit 1150.

The boarding gate EL system 1200 includes an elevator car operation unit 1210, an image capture unit 1220, an elevator car assignment unit 1230, a security information recognition unit 1240, a communication unit 1250, an information provision unit 1260, and a control unit 1270.

The elevator car operation unit 1210 operates an elevator car, including upward/downward movement of the elevator car, opening/closing of an elevator door, and the like.

The image capture unit 1220 is disposed at the elevator hall or inside the elevator car to acquire a user's information (the type and weight of baggage, and the like).

The elevator car assignment unit 1230 assigns a dedicated elevator car to a user upon completion of authorization of the user's secondary security token.

The security information recognition unit 1240 confirms the user's information (the type and weight of baggage, and the like).

The communication unit 1250 transmits and receives information to and from the vertiport security system 1100 and the user terminal 1300.

The information provision unit 1260 provides user security-related information, elevator car operation-related information, and the like to the vertiport security system 1100 and the user terminal 1300.

The control unit 1270 includes an image analyzer. The image analyzer may acquire user information using image data acquired by the image capture unit 1220.

The boarding gate EL system 1200 may further include an X-ray inspection module to enable inspection of personal belongings based on X-ray images inside the elevator car.

The boarding gate EL system 1200 may generate a tertiary security token and may provide the tertiary security token to the user terminal 1300 through the communication unit 1250.

The user terminal 1300 includes a boarding information storage unit 1310, an authentication information storage unit 1320, a security token request unit 1330, a communication unit 1340, and a control unit 1350.

The boarding information storage unit 1310 stores a user's boarding information.

The authentication information storage unit 1320 stores a security token provided by the vertiport security system. The authentication information storage unit 1320 may store the primary security token, the secondary security token, and the tertiary security token.

The security token request unit 1330 provides a user's boarding information to the vertiport security system 1100 and requests a security token.

The communication unit 1340 transmits and receives the security token, the boarding information, and the like to and from the vertiport security system 1100 and the boarding gate EL system 1200.

The control unit 1350 controls the boarding information storage unit 1310, the authentication information storage unit 1320, the security token request unit 1330, and the communication unit 1340.

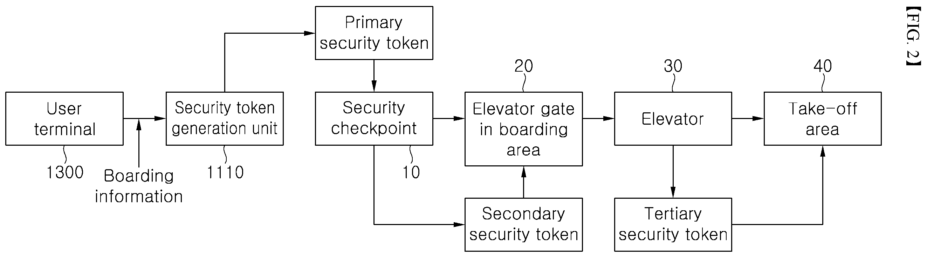

FIG. 2 is a schematic block diagram illustrating a technical implementation of the air mobility take-off and landing airfield security system of FIG. 1.

The air mobility take-off and landing airfield security system may be applied to a vertiport.

That is, a user moves from a lower floor to a take-off area using a passenger-dedicated elevator car and then boards an urban air mobility (UAM) aircraft.

In the security system, an elevator is used to perform security screening, utilizing the fact that users must use the elevator to board the UAM aircraft, as described above.

The user requests a security token while sending boarding information stored in the boarding information storage unit 1310 to the vertiport security system 1100.

The security token generation unit 1110 of the vertiport security system 1100 generates a primary security token. The communication unit 1140 of the vertiport security system 1100 transmits the primary security token to the user terminal 1300.

The communication unit 1340 of the user terminal 1300 receives the primary security token, and the control unit 1350 of the user terminal 1300 controls the authentication information storage unit 1320 to store the primary security token.

Subsequently, when the user presents the primary security token at the security checkpoint, a security authorization process is carried out through the security information recognition unit 1120 and the security screening unit 1130 of the vertiport security system 1100.

When the primary security token is authorized through the security authorization process, the security token generation unit 1110 generates a secondary security token and provides the secondary security token to the user terminal 1300.

The user moves to an elevator gate in a boarding area and then presents the secondary security token.

A security authorization process for the secondary security token is carried out through the security information recognition unit 1120 and the security screening unit 1130 of the vertiport security system 1100.

When authentication of the secondary security token is completed, the elevator car assignment unit 1230 assigns an elevator car available for transport to a take-off area to the user.

Then, the user's information (the number of users boarding the elevator car, their appearance, their weight, the number of baggage items, their type, their weight, and the like) is acquired through the image capture unit 1220 disposed at the elevator hall or inside the elevator car to be provided to the security information recognition unit 1240.

To this end, the image capture unit 1220 may include a depth module and an RGB module. The depth module may acquire depth information of a captured image. For example, the depth information may be obtained by measuring the delay or phase shift of a modulated light signal for every pixel of the captured image to acquire time-of-flight data.

The RGB module may acquire a color image (image data). From the color image, edge features, color distribution, frequency characteristics (or wavelet transform), and the like may be extracted.

As such, by acquiring distance information of a recognition target object based on the depth information of an image captured by the image capture unit 1220 inside the elevator car while performing computation of the edge features extracted from the color image, it is possible to recognize the presence of users, baggage items, and other objects inside the elevator car.

In addition, the vertiport security system 1100 may acquire information about the weight of users and baggage items inside the elevator car using a load cell provided to the elevator car. The security information recognition unit 1240 may provide at least one of the user's information acquired by the image capture unit 1220 inside the elevator car and the weight information acquired from the elevator car to the security information recognition unit 1120 and the security screening unit 1130 of the vertiport security system 1100 through the communication unit 1250. The vertiport security system 1100 may determine whether to complete the security authorization process for the secondary security token based on the information provided by the security information recognition unit 1240.

When the security authorization process for the secondary security token is completed, the security token generation unit 1110 may generate a tertiary security token and provide the tertiary security token to the user terminal 1300.

Alternatively, the tertiary security token may be generated by the boarding gate EL system and may be provided to the user terminal 1300 through the communication unit 1250.

The user presents the tertiary security token at the take-off area. When authentication of the tertiary security token is completed, the user is permitted to board the UAM aircraft.

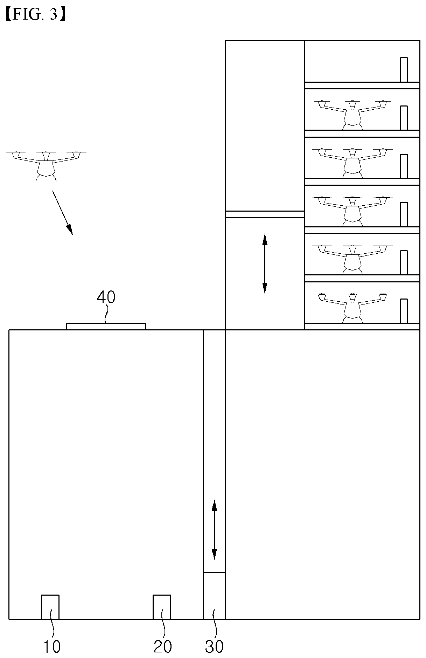

FIG. 3 is a schematic diagram illustrating usage of the air mobility take-off and landing airfield security system according to one embodiment of the present invention.

FIG. 3 shows an embodiment in which the air mobility take-off and landing airfield security system of FIG. 2 is applied to a vertiport, which is a designated area for take-off and landing of a UAM aircraft.

The vertiport includes a take-off area, a landing area, and a hangar and may be constructed on the rooftop of a building.

In addition, the vertiport may be configured as a multi-story structure, wherein each of the take-off area and the landing area may be selectively situated on the rooftop of the building or on the rooftop of the hangar.

The UAM aircraft may move to the landing area, the hangar, and the take-off area and may be parked in the hangar.

More specifically, a passenger undergoes primary security screening at a security checkpoint 10 by presenting a primary security token and boarding information. The security screening at a security checkpoint 10 may include reading X-ray images of the passenger's belongings, such as bags, using X-ray equipment or checking whether the passenger is carrying dangerous or prohibited items using a metal detector or the like.

When the primary security screening is completed, the passenger moves to an elevator gate 20 in a boarding area.

The passenger undergoes secondary security screening at the elevator gate 20 in the boarding area by presenting the secondary security token and boarding information.

When the secondary security screening at the elevator gate 20 in the boarding area is completed, a dedicated elevator car is called.

The passenger undergoes tertiary security screening at an elevator hall or inside the elevator car 30.

The passenger moves to the take-off area 40 and undergoes quaternary security screening at the take-off area 40 by presenting the tertiary security token and boarding information.

The take-off area 40 may be situated on the same level as the rooftop.

As such, the air mobility take-off and landing airfield security system ensures that a passenger undergoes four stages of security screening in the vertiport while moving to the take-off area before boarding the UAM aircraft, thereby enabling highly secure security screening and realizing more convenient security screening by utilizing an elevator as a sort of security checkpoint.

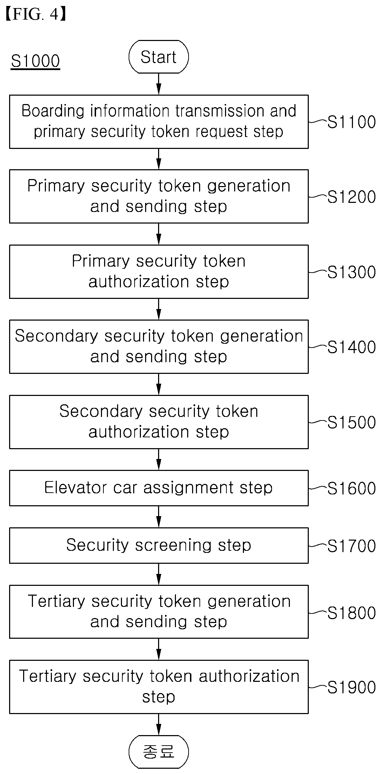

FIG. 4 is a flow diagram of a method of controlling the air mobility take-off and landing airfield security system according to one embodiment of the present invention.

Referring to FIG. 4, the method includes: a boarding information transmission and primary security token request step S1100, a primary security token generation and sending step S1200, a primary security token authorization step S1300, a secondary security token generation and sending step S1400, a secondary security token authorization step S1500, an elevator car assignment step S1600, an additional security screening step S1700, a tertiary security token generation and sending step S1800, and a tertiary security token authorization and boarding permission step S1900.

More specifically, the boarding information transmission and primary security token request step S1100 is a step in which a user provides boarding information, such as reservation information, to the vertiport security system through their terminal and requests a primary security token.

The primary security token generation and sending step S1200 is a step in which the vertiport security system confirms the user's reservation information, generates a primary security token, and sends the primary security token to the user terminal.

The primary security token authorization step S1300 is a step in which the user presents the primary security token stored in the user terminal at the security checkpoint and requests authorization of the primary security token.

Here, authorization of the primary security token is carried out through the security information recognition unit 1120 and the security screening unit 1130 of the vertiport security system 1100.

The secondary security token generation and sending step S1400 is a step in which, upon authorization of the primary security token, the security token generation unit 1110 generates a secondary security token and sends the secondary security token to the user terminal 1300.

Here, the secondary security token may store primary security token information and user boarding information.

The secondary security token authorization step S1500 is a step in which the user moves to the elevator gate in the boarding area and requests authorization of the secondary security token.

Specifically, the user presents the secondary security token stored in the authentication information storage unit 1320 of the user terminal 1300 at the elevator gate in the boarding area. The security information recognition unit 1120 and the security screening unit 1130 of the vertiport security system 1100 may carry out a security authorization process for the secondary security token.

Alternatively, the security authorization process for the secondary security token may be carried out through the security information recognition unit 1240 of the boarding gate EL system 1200.

The elevator car assignment step S1600 is a step in which, upon completion of authorization of the secondary security token, the elevator car assignment unit 1230 assigns an elevator car available for transport to the take-off area to the user.

The additional security screening step S1700 is a step in which boarding information of the user boarding the elevator car is confirmed and security screening is performed. To this end, the boarding gate EL system 1200 may acquire information about the user inside the elevator car (the number of users aboard the elevator car, their appearance, their weight, the number of baggage items, their type, their weight, and the like) using the image capture unit 1220 and a load cell provided to the elevator car. The acquired user information may be utilized in a security authorization process in the security screening step S1700.

The additional security screening step S1700 may also involve inspecting the user's belongings inside the elevator car based on X-ray imaging.

In another embodiment, when a camera is provided to an elevator hall, the camera may be used to detect a security anomaly based on information identified from images captured by the camera, such as the number of boarding users, their appearance, the number of baggage items, their type, and the like. Additionally, when the user is aboard the elevator car, information about the user's weight and the weight of baggage may be acquired using the load cell provided to the elevator car to be utilized in the security authorization process.

The tertiary security token generation and sending step S1800 is a step in which, upon completion of the security authorization process at the elevator hall or inside the elevator car in the security screening step S1700, the security token generation unit 1110 generates a tertiary security token and provides the tertiary security token to the user terminal 1300.

The tertiary security token may contain the primary security token, the secondary security token, and the boarding information.

When the user's information is different from initial information, that is, when there is a change between the user's information and initial information, such as when the number of baggage items increases or decreases, authorization is denied.

The tertiary security token is stored in the authentication information storage unit 1320 of the user terminal 1300.

The tertiary security token authorization and boarding permission step S1900 is a step in which the tertiary security token is confirmed at the take-off area and boarding permission is granted.

To this end, the user presents the tertiary security token upon arrival at the take-off area.

The tertiary security token is provided to the vertiport security system 1100, and the security information recognition unit 1120 and the security screening unit 1130 authorize the tertiary security token and grant boarding permission.

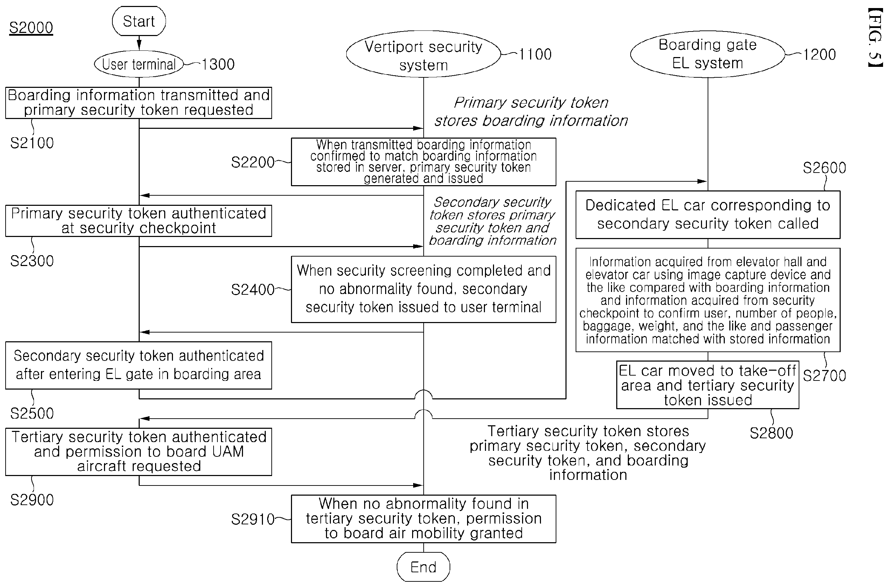

FIG. 5 is a schematic block diagram illustrating an embodiment of the detailed technical configuration of the method for controlling the air mobility take-off and landing airfield security system shown in FIG. 4.

Referring to FIG. 5, a method S2000 for controlling the air mobility take-off and landing airfield security system includes: sending, by a passenger terminal, boarding information and requesting a primary security token S2100; generating and sending, by the vertiport security system, a primary security token S2200; authenticating the primary security token at the security checkpoint S2300; generating and sending, by the vertiport security system, a secondary security token S2400; authenticating the secondary security token at the elevator gate in the boarding area S2500; assigning, by the boarding gate EL system, a dedicated elevator corresponding to the secondary security token S2600; performing security screening at the elevator hall or inside the elevator car S2700; generating and sending, by the boarding gate EL system, a tertiary security token S2800; requesting, by the passenger terminal, authorization of the tertiary security token and boarding permission S2900; and granting, by the vertiport security system, permission to board a UAM aircraft S2910.

More specifically, in the step of sending, by a passenger terminal, boarding information and requesting a primary security token S2100, a passenger provides boarding information stored in the user terminal 1300, such as reservation information, to the vertiport security system 1100 and requests a primary security token.

In the step of generating and sending, by the vertiport security system, a primary security token S2200, the vertiport security system 1100 confirms whether the boarding information provided by the passenger matches boarding information stored on a server.

When the boarding information provided by the passenger is confirmed to match boarding information stored on a server, the vertiport security system generates a primary security token and sends the primary security token to the user terminal 1300.

Here, the primary security token may store the boarding information.

The step of authenticating the primary security token at the security checkpoint S2300 is a step in which the passenger moves to the security checkpoint and presents the primary security token to obtain authentication. At the security checkpoint, security screening is performed with respect to the primary security token transmitted to the vertiport security system. In addition, security screening at the security checkpoint may include reading X-ray images of the passenger's belongings, such as bags, using X-ray equipment or checking for dangerous or prohibited harmful items using a metal detector or the like.

The step of generating and sending, by the vertiport security system, a secondary security token S2400 is a step in which, when no abnormality is found as a result of security screening, the vertiport security system 1100 generates a secondary security token and sends the secondary security token to the user terminal 1300.

Here, the secondary security token may store primary security token information and user boarding information.

In the step of authenticating the secondary security token at the elevator gate in the boarding area S2500, the passenger moves to the elevator gate in the boarding area to obtain authentication of the secondary security token stored in the passenger terminal.

Here, the passenger presents the secondary security token stored in the user terminal 1300 at the elevator gate. The boarding gate EL system 1200 confirms the secondary security token.

In the step of assigning, by the boarding gate EL system, a dedicated elevator corresponding to the secondary security token S2600, an elevator car available for transport to the take-off area is assigned to a user corresponding to the secondary security token. Here, assignment of an elevator car may be carried out based on the number of users, there weight, the number of baggage items, their type, and their weight.

That is, an elevator car appropriate for the user's information may be assigned.

In the step of performing security screening at the elevator hall or in the elevator car S2700, information related to a user boarding the elevator car is confirmed and security screening is performed. That is, this step includes confirming the user's information (such as the type and weight of baggage items and the like) and checking for any changes in the user's information after the user passes through the security checkpoint before boarding the elevator car.

The step of generating and sending, by the boarding gate EL system, a tertiary security token S2800 is a step in which, when the security authorization process at the elevator hall or inside the elevator car is completed, a tertiary security token is generated and is provided to the user terminal 1300.

In the step of requesting, the passenger terminal, authorization of the tertiary security token and boarding permission S2900, the passenger moves to the take-off area, presents the tertiary security token stored in the passenger terminal, and requests authorization of the tertiary security token and boarding permission.

In the step of granting, by the vertiport security system, permission to board a UAM aircraft S2910, the vertiport security system 1100 authorizes the tertiary security token and grants permission to board the UAM aircraft.

While the preferred embodiments of the present invention have been described with reference to the drawings as above, it should be understood that the foregoing embodiments are provided for illustration only and are not to be in any way construed as limiting the present invention, and that various modifications, changes, alterations, and equivalent embodiments can be made by those skilled in the art without departing from the spirit and scope of the disclosure. For example, even when the invention described herein is performed in a different order than described herein and/or the components of the described systems, structures, devices, circuits, and the like are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. An air mobility take-off and landing airfield security system, comprising:
a user terminal comprising a boarding information storage unit configured to store a user's boarding information;
a vertiport security system comprising a security token generation unit configured to generate a security token based on the user's boarding information provided through the user terminal; and
a boarding gate elevator (EL) system comprising an elevator car assignment unit configured to assign an elevator car upon authentication of the security token and a security information recognition unit comprising an image capture unit configured to recognize the user's boarding information.

2. The air mobility take-off and landing airfield security system according to claim 1, wherein the user terminal further comprises:
a security token request unit configured to provide the user's boarding information to the vertiport security system and to request a security token; and
an authentication information storage unit configured to store the security token provided by the vertiport security system.

3. The air mobility take-off and landing airfield security system according to claim 2, wherein the vertiport security system further comprises:
a security information recognition unit configured to confirm security token information presented by the user; and
a security screening unit configured to confirm the user's security information and the boarding information and to carry out an authentication process.

4. The air mobility take-off and landing airfield security system according to claim 1, wherein
the user's security token and boarding information are confirmed at a security checkpoint, and
the security token generation unit generates a secondary security token and sends the secondary security token to the user terminal.

5. The air mobility take-off and landing airfield security system according to claim 4, wherein
the secondary security token is authenticated at an elevator gate in a boarding area, and,
upon completion of authentication of the secondary security token, the elevator car assignment unit calls a dedicated elevator car corresponding to the secondary security token.

6. The air mobility take-off and landing airfield security system according to claim 1, wherein, when the user's boarding information is confirmed by the security information recognition unit, the boarding gate EL system issues a tertiary security token.

7. The air mobility take-off and landing airfield security system according to claim 6, wherein
the tertiary security token is authenticated at a take-off area, and,
upon authentication of the tertiary security token, permission to board a UAM aircraft is granted.

8. A method of controlling an air mobility take-off and landing airfield security system, comprising:
a boarding information transmission and primary security token request step in which a user provides boarding information, such as reservation information, to a vertiport security system and requests a primary security token;
a primary security token generation and sending step in which the vertiport security system confirms the user's reservation information, generates a primary security token, and sends the primary security token to a user terminal;
a primary security token authorization step in which the user presents the primary security token stored in the user terminal and requests authorization of the primary security token;
a secondary security token generation and sending step in which, upon completion of authorization of the primary security token, a security token generation unit generates a secondary security token and sends the secondary security token to the user terminal;
a secondary security token authorization step in which the user requests authorization of the secondary security token and the secondary security token is authorized;
an elevator car assignment step in which, upon completion of authorization of the secondary security token, a dedicated elevator car is assigned; and
an additional security screening step in which security screening for the user's boarding information is carried out at an elevator hall or inside the elevator car.

9. The method according to claim 8, further comprising:
a tertiary security token generation and sending step in which, upon completion of a security authorization process in the additional security screening step, a tertiary security token is generated and provided to the user terminal; and
a tertiary security token authorization and boarding permission step in which an authentication process for the tertiary security token is carried out at a take-off area and, upon completion of the authentication process, boarding permission is granted.

10. The method according to claim 8, wherein:
in the primary security token authorization step, the user presents the primary security token stored in the user terminal at a security checkpoint and requests authorization of the primary security token; and,
in the secondary security token authorization step, the user requests authorization of the secondary security token after moving to an elevator gate in a boarding area, and, in response to the user's request, the secondary security token is authorized.
